# EUROPÄISCHE PATENTANMELDUNG

(11) **EP 1 481 648 A1**
(43) Veröffentlichungstag der Anmeldung: **01.12.2004**
(21) Anmeldenummer: 03011838.4
(22) Anmeldetag: 26.05.2003
(51) Int. Cl.: A61D 1/00, B23B 51/10, A01L 15/00, A01L 11/00

(54) **Bohr-/Fräswerkzeug zur Hufbehandlung**

(71) Anmelder: Roeckl, Andreas, Dr., 78052 Villingen-Schwenningen (DE)
(72) Erfinder: Roeckl, Andreas, Dr., 78052 Villingen-Schwenningen (DE)
(74) Vertreter: Grünecker, Kinkeldey, Stockmair & Schwanhäusser Anwaltssozietät

(57) **Zusammenfassung**

Die Erfindung betrifft einen Huffräskopf und eine Huf-Bohr/Fräs-Kombination zur Hufbehandlung. Der Huffräskopf umfass eine axiale Bohrung zum Ein- oder Durchführen eines Bohrers und eine Mantelfläche, die bei axialer Rotation des Huffräskopfes fräsende Eigenschaften aufweist. Die Huf-Bohr/Fräs-Kombination zur Hufbehandlung umfasst eine Bohreinrichtung und eine Fräseinrichtung, die axial miteinander so ausgerichtet sind, dass sich einem bei axialer Rotation bohrend wirkender Abschnitt ein fräsend wirkender Abschnitt anschließt.

## Beschreibung

### Gebiet der Erfindung

Die Erfindung betrifft einen Huffräskopf und eine Huf-Bohr/Fräs-Kombination zur Hufbehandlung.

### Stand der Technik

Hufabszesse (Pododermatitis superficialis / profunda purulenta), Nageltrittverletzungen und andere Lederhautentzündungen, z.B. bei Pferden, sind i. d. R. zwischen der Huflederhaut und der Hornkapsel lokalisiert.

Um eine solche Entzündung genau zu lokalisieren, übt ein Tierarzt mit einer sogenannten Hufzange einen punktuellen Druck auf den Huf aus, wobei er anhand der Reaktion des Tieres feststellen kann, wo sich der entzündete Bereich der Huflederhaut befindet. Der Tierarzt schabt dann mit einem Hufmesser oberflächliches und verschmutztes Horn in diesem Sohlenabschnitt ab und kann so z.B. einen unter Umständen dunkel verfärbten feinen Haarriss in sonst unauffälligem Horn finden, durch den Bakterien bis zur Lederhaut vorgedrungen sein können.

Damit solche Entzündungen abheilen können, müssen sie vom Fachmann (Tierarzt oder Hufschmied) eröffnet werden. Hierzu schneidet der Fachmann mit einem Hufmesser eine Öffnung in die Hornsohle, bis die Abszesshöhle eröffnet ist und Wundsekret/Eiter nach außen abfließen können.

Da aber die Behandlung mit einem Hufmesser oft zu großen und unförmigen Defekten im Hufhorn führt und sich das Sohlenhorn nur sehr langsam erneuert, etwa in einem Zeitraum von einem halben bis einem ganzen Jahr, erfordert ein mit dem Hufmesser verursachter Defekt in der Hornsohle eine langwierige, aufwendige und entsprechend teure huforthopädische Nachsorge, um die freigelegte Lederhaut der Hufsohle bis zur Abheilung zu schützen, z.B. durch Hufeisen mit Stahlplatte oder Hufverbände.

Es ist daher die Aufgabe der Erfindung, Vorrichtungen zur Hufbehandlung bereitzustellen, die diese Nachteile vermeiden und eine schnellere und weniger pflegeintensive Verheilung ermöglichen.

### Beschreibung der Erfindung

Die oben beschriebene Aufgabe wird erfindungsgemäß durch den Huffräskopf mit den Merkmalen des Anspruchs 1 und die Huf-Bohr/Fräs-Kombination mit den Merkmalen des Anspruchs 5 gelöst.

Vorteilhafte Weiterbildungen werden in den abgängigen Ansprüchen beschrieben.

Der erfindungsgemäße Huffräskopf umfasst eine axiale Bohrung zum Ein- oder Durchführen eines Bohrers, und eine Mantelfläche, die bei axialer Rotation des Huffräskopfes fräsende Eigenschaften aufweist.

Bei durchgehender Bohrung kann der Huffräskopf zusammen mit einem Bohrer mit geeigneter Länge und geeignetem Durchmesser als Aufsatz für einen (hand- oder motorbetriebenen) Bohrapparat verwendet werden. Der mit dem Huffräskopf verwendete Bohrer muss länger als die Länge des Huffräskopfes sein, so dass sowohl die Bohrerspitze als auch der Bohrerschaft aus den beiden Enden der Bohrung des Huffräskopfes hinausstehen.

Der Bohrer wird in diesem Fall über den Bohrerschaft des Bohrers in das Bohrfutter des Bohrapparats eingespannt.

### Zur Arretierung des Huffräskopfs gibt es mehrere Möglichkeiten:

Die Wandung der Bohrung des Huffräskopfes kann ein Gewinde aufweisen, dessen Steigung an die Wendel des zusammen mit dem Huffräskopf zu verwendenden Bohrers angepasst ist, so dass eine freie Rotation zwischen Huffräskopf und durchgeführtem Bohrer nicht möglich ist. Es sind nur schraubenartige Rotationen/Translationen möglich, wobei sich der Huffräskopf entlang der Bohrerlängsrichtung verschiebt. Der Huffräskopf wird schraubenartig über den Bohrer aufgesteckt, beispielsweise bis die rückwärtige Stirnseite des Huffräskopfes am Bohrfutter anliegt. Beim Bohren/Fräsen verhält sich diese Bohrer/Huffräskopf-Kombination dann wie eine starre Einheit, d.h. es sind keine Relativbewegungen (Rotationen oder Translationen) zwischen Bohrer/Huffräskopf möglich.

Die Wandung der Bohrung des Huffräskopfes kann aber auch glatt sein. In diesem Fall sollte am Huffräskopf eine Feststelleinrichtung vorgesehen sein, um axiale und/oder radial Relativbewegungen zwischen dem Huffräskopf und einem durch die axiale Bohrung ein- oder durchgeführten Bohrer zu verhindern. Beispielsweise kann die Feststelleinrichtung eine Klemmschraube umfassen, die in radialer Richtung bewegbar ist, um einen durch die Bohrung bzw. in der Bohrung eingeführten Bohrer festzuklemmen. Der Huffräskopf kann aber auch eine Höhlung aufweisen, die so ausgebildet ist, dass der Huffräskopf wenigstens teilweise auf das Bohrfutter aufgesetzt werden kann. Die Feststelleinrichtung kann dann in dem die Höhlung umgebenden Wandbereich vorgesehen sein und eine Klemmschraube oder einen Klemmstift umfassen. Das Arretieren erfolgt vorzugsweise dadurch, dass die Klemmschraube bzw. der Klemmstift in Eingriff mit der Öffnung im Bohrfutter gebracht wird, die normalerweise zum Ansetzen des Bohrfutterschlüssels dient.

Ist die Bohrung des Huffräskopfes nicht durchgehend und durchstößt nur an die vordere (spitzere) Seite des Huffräskopfes, so wird der Bohrer auf den Huffräskopf aufgesteckt und arretiert. Zu diesem Zweck kann wiederum eine Feststelleinrichtung vorgesehen sein, um axiale und/oder radial Relativbewegungen zwischen dem Huffräskopf und dem Bohrer zu verhindern. Vorzugsweise umfasst die Feststelleinrichtung eine Klemmschraube, die in radialer Richtung bewegbar ist und einen durch die Bohrung bzw. in der Bohrung eingeführten Bohrer festzuklemmen.

Bei nicht durchgehender Bohrung muss der Huffräskopf direkt mit der Vorrichtung verbunden werden, die den Huffräskopf in Rotation versetzen soll. Hierfür kann an der rückseitigen Stirnfläche des Huffräskopfes ein Schaft vorgesehen sind, der das Einspannen des Huffräskopfes in ein Bohrfutter ermöglicht. Alternativ kann der Schaft direkt mit einem Handgriff verbunden sein, mittels dem die Anordnung manuell oder über einen manuell betriebenen Mechanismus in Drehung versetzt werden kann.

Der axiale Querschnitt des Huffräskopfes muss sich von der hinteren zur vorderen Stirnseite allmählich oder stufenweise (Satzfräser) verjüngen. Der Huffräskopf kann beispielsweise die Form von aufeinanderfolgend angeordneten Walzenfräserabschnitten mit von der vorderen zur hinteren Stirnseite zunehmenden Querschnitten aufweisen (Satzfräser).

Besonders bevorzugt ist aber eine Weiterbildung, bei der der Huffräskopf die Form eines Kegelstumpfes aufweist (d.h. die Einhüllende der Mantelfläche des Huffräskopfes ist konisch), da hiermit eine besonders saubere, trichterförmige Öffnung in Huf erreicht wird.

Wie oben bereits angesprochen sind Weiterbildungen vorteilhaft, bei denen der Huffräskopf eine Feststelleinrichtung aufweist, um eine axiale und radiale Relativbewegung zwischen dem Huffräskopf und einem durch die axiale Bohrung ein- oder durchgeführten Bohrer zu verhindern.

Der Huffräskopf kann an seiner Mantelfläche Frässchneiden und/oder Schleifpartikel aufweisen. Die Frässchneiden können gerad-, schräg-, oder spiralverzahnt sein. Während Schleifpartikel und die geradverzahnten Frässchneiden keinen axialen Materialtransport aus der Bohröffnung heraus unterstützen, wird mit schräg- oder spiralverzahnten Frässchneiden abgetragenes (ausgebohrtes und abgefrästes) Hornmaterial aktiv aus der Öffnung heraustransportiert. Letztere sind daher besonders bevorzugt.

Die erfindungsgemäße Huf-Bohr/Fräs-Kombination zur Hufbehandlung umfasst eine Bohreinrichtung und eine Fräseinrichtung, die axial miteinander so ausgerichtet sind, dass sich einem bei axialer Rotation bohrend wirkender Abschnitt ein fräsend wirkender Abschnitt anschließt. Die Arbeitsweise der Huf-Bohr/Fräs-Kombination entspricht derjenigen des Huffräskopfes mit durch-/eingeführtem Bohrer und muss hier daher nicht in aller Ausführlichkeit wiederholt werden. Im Unterschied zum Fräsaufsatz sind die Bohreinrichtung und die Fräseinrichtung der Huf-Bohr/Fräs-Kombination nicht voneinander trennbar und - wenn überhaupt - axial allenfalls geringfügig relativ zueinander verschiebbar.

Die Mantelfläche der Fräseinrichtung hat wiederum bevorzugt eine konische Einhüllende. Weiterhin muss auch die Einhüllende der Mantelfläche der Bohreinrichtung nicht unbedingt zylindrisch sein, sondern kann ebenso konische Form besitzen.

Wenn die Bohreinrichtung und die Fräseinrichtung axial gegeneinander verschiebbar sind, so ist eine Feststelleinrichtung vorgesehen, die ein Arretieren von Bohreinrichtung und Fräseinrichtung ermöglicht, um so eine Relativbewegung (axial und/oder radial) zwischen der Fräseinrichtung und der Bohreinrichtung zu verhindern.

In einer besonders bevorzugten Weiterbildung ist aber die Huf-Bohr/Fräs-Kombination aus einem einzigen starren Werkstück hergestellt, d.h. die Bohreinrichtung und die Fräseinrichtung sind einstückig miteinander ausgebildet.

Besonders bevorzugt wird - ob einstückig oder zweistückig - eine Weiterbildung, bei der Schneiden der Bohreinrichtung unmittelbar in Schneiden der Fräseinrichtung übergehen. Dadurch wird durch die Bohreinrichtung ausgeschnittenes Material direkt zur Fräseinrichtung weitertransportiert und über diese aus dem Bohrloch abgeführt.

Die Bohreinrichtung und die Fräseinrichtung können zweischneidig ausgebildet sein. Als besonders vorteilhaft hat sich aber eine Weiterbildung erwiesen, bei der die Bohreinrichtung und die Fräseinrichtung jeweils dreischneidig ausgebildet sind.

In einer alternativen, ebenfalls bevorzugten Weiterbildung einer einstückigen Huf-Bohr/Fräs-Kombination ist eine radial verlaufende Nut vorgesehen, die die Bohreinrichtung und die Fräseinrichtung gegeneinander abgrenzt. Diese Nut erleichtert den Materialtransport vom bohrenden Abschnitt zum fräsenden Abschnitt. Zudem erleichtert sie die Fertigung der Huf-Bohr/Fräs-Kombination.

Vorzugsweise weist die Bohreinrichtung der Huf-Bohr/Fräs-Kombination eine abgerundete Spitze auf, da hiermit ein abgerundetes Bohrloch und scharfe, saubere Schnittflächen auch in weicherem Horn erzielt werden können.

Die gesamte Huf-Bohr/Fräs-Kombination kann starr mit einem Handgriff oder einem Handbohrer verbunden sein. Vorteilhafterweise besitzt sie aber einen Schaft, der auch die Befestigung der Huf-Bohr/Fräs-Kombination in einem Spannfutter erlaubt.

Bevorzugte Ausführungsformen werden nachfolgend unter Bezugnahme auf die beigefügten Figuren beschrieben.

### Es zeigen:

- Fig. 1:: eine schematische Schnittansicht eines ersten Ausführungsbeispiels des erfindungsgemäßen Huffräskopfes (Fig. 1A) und die Verwendung des Huffräskopfes zusammen mit einem herkömmlichen Bohrer (Fig. 1 B);
- Fig. 2:: eine schematische Schnittansicht eines zweiten Ausführungsbeispiels des erfindungsgemäßen Huffräskopfes;
- Fig. 3:: eine perspektivische Ansicht eines ersten Ausführungsbeispiels der erfindungsgemäßen Huf-Bohr/Fräs-Kombination;
- Fig. 4:: eine perspektivische Ansicht eines zweiten Ausführungsbeispiels der erfindungsgemäßen Huf-Bohr/Fräs-Kombination;
- Fig. 5:: eine perspektivische Ansicht eines dritten Ausführungsbeispiels der erfindungsgemäßen Huf-Bohr/Fräs-Kombination;
- Fig. 6:: eine perspektivische Ansicht eines vierten Ausführungsbeispiels der erfindungsgemäßen Huf-Bohr/Fräs-Kombination;
- Fig. 7-10:: Schnittansichten von bevorzugten Ausführungsformen von erfindungsgemäßen Huf-Bohr/Fräs-Kombinationen.

Bezugszeichen von Merkmalen, die in unterschiedlichen Weiterbildungen dieselbe oder eine vergleichbare Funktion haben, erhöhen sich von Figur zu Figur um "Zehn". Bei der Beschreibung der Funktionen werden unnötige Wiederholungen vermieden und es wird auf die Beschreibung der entsprechenden Merkmale bei anderen Weiterbildungen verwiesen.

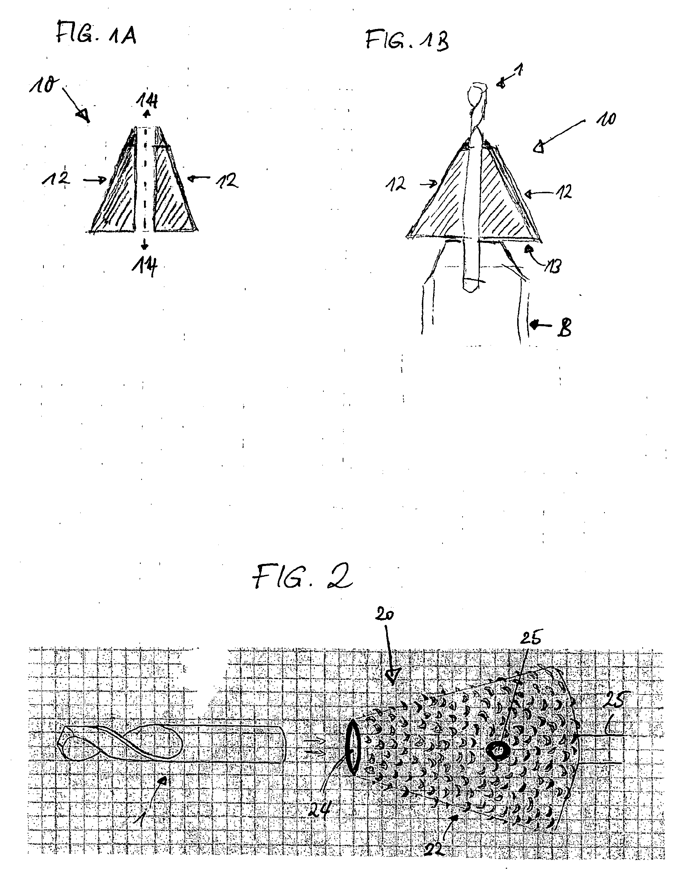

Figur 1A zeigt eine schematische Schnittansicht eines ersten Ausführungsbeispiels des erfindungsgemäßen Huffräskopfes 10. Der Huffräskopf 10 weist eine konische Form auf, und besitzt eine axial durchgehende Bohrung 14. Die Mantelfläche 12 des Huffräskopfes 10 ist mit Frässchneiden und/oder Feilschuppen/Körnung, etc. versehen. Die Frässchneiden können längsverlaufend oder leicht schräg verlaufend angeordnet sein. Die Körnung kann Hartmetall-Schuppen, Hartmetall- oder Diamant-Körner umfassen.

Wie Figur 1 B zeigt, kann der Huffräskopf 10 auf einen herkömmlichen Bohrer 1, der in einem Bohrfutter B einer Bohrmaschine arretiert ist, aufgebracht werden. Dabei kann die rückseitige Stirnfläche 13 des Huffräskopfes 10 an der Oberseite des Bohrfutters B anliegen. Um eine Relativbewegung zwischen Huffräskopf 10 und Bohrer 1 zu verhindern, können (nicht skizzierte) Einrichtungen wie Innengewinde im Huffräskopf, Feststellschraube im Huffräskopf, etc. vorgesehen sein. Der Durchmesser des Bohrers 1 liegt im Bereich zwischen 2 und 8 mm.

Die Länge und Konizität des Huffräskopfes 10 variiert je nach Einsatzzweck: zum Sondieren/Probebohren und bei kleinen Abszessen mit dünnflüssigem Sekret wird zweckmäßigerweise ein schlanker, schmaler Huffräskopf verwendet (zusammen mit einem kleinen Bohrer); bei Nageltrittverletzungen und großflächigen Abszessen wird dagegen ein breiter und stark konischer Huffräskopf verwendet.

Figur 2 zeigt eine schematische Schnittansicht eines zweiten Ausführungsbeispiels des erfindungsgemäßen Huffräskopfes. Dieser Huffräskopf 20 besitzt eine kegelstumpfförmige Form. An der vorderen Stirnseite ist eine axiale Bohrung 24 vorgesehen, die nicht bis zur rückseitigen Stirnseite durchgeht. An der rückseitigen Stirnseite weist der Huffräskopf 20 einen Schaft 25 auf, mit dem eine Befestigung im Spannfutter B einer Bohrmaschine möglich ist. Die Mantelfläche 22 ist mit einer Fräskörnung (Feilschuppen) versehen. Senkrecht zur Achse des Huffräskopfes 20 ist eine Bohrung vorgesehen, die sich bis zur axialen Bohrung erstreckt und mit Hilfe einer Feststellschraube 25 das Arretieren eines Bohrers 1 ermöglicht, der durch die axiale Bohrung 24 bis zum Anschlag in den Huffräskopf 20 eingeführt wird.

Bei den Weiterbildungen von Fig. 1 und Fig. 2 können der Bohrer 1 und der Huffräskopf 10, 20 relativ zueinander axial verschoben werden, so dass die Länge des bohrenden Abschnitts vor dem fräsenden Abschnitt variiert werden kann. Eine solche variable Länge des bohrenden Abschnitts ist vor allem für das Sondieren eines Abszesses und zur Behandlung von sehr tief in der Hornkapsel lokalisierten Abszessen vorteilhaft.

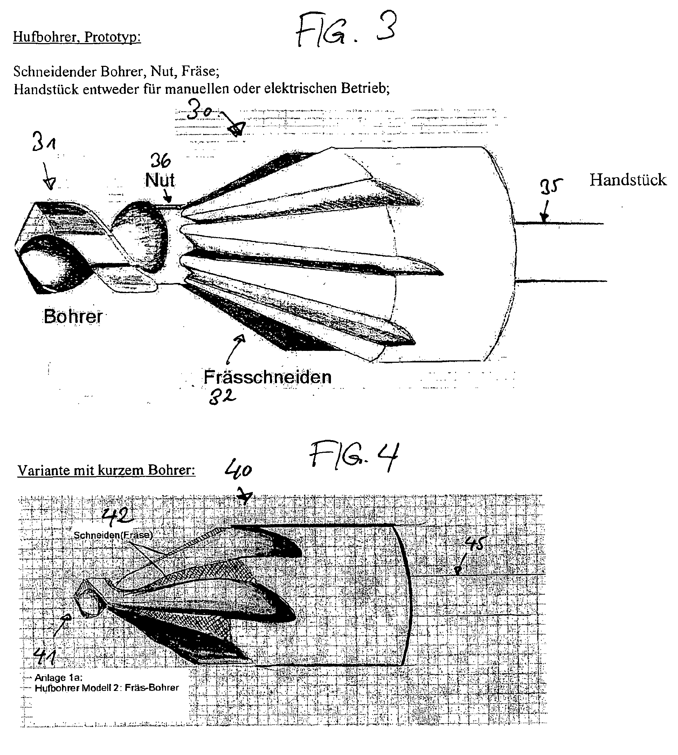

Figur 3 zeigt ein erstes Ausführungsbeispiel der erfindungsgemäßen Huf-Bohr/Fräs-Kombination. Die Huf-Bohr/Fräs-Kombination 30 lässt sich grob in folgende Abschnitte unterteilen: Bohreinrichtung 31, Nut 36, Fräseinrichtung 32, Schaft 35. Der Schaft 35 ist mit einem Handstück verbunden bzw. verbindbar oder kann durch ein Spannfutter festgespannt werden. Der bohrend wirkende Abschnitt ist vom fräsend wirkenden Abschnitt durch die axiale Nut 36 getrennt. Dies erlaubt zum Einen eine leichtere Fertigung der Bohr/Fräs-Kombination, erleichtert zum Anderen aber auch den Materialtransport aus dem bohrenden Bereich in den fräsenden Bereich. Der Durchmesser der Bohreinrichtung 31 liegt bevorzugt im Bereich zwischen 2 und 8 mm. Die Länge der Bohreinrichtung 31 liegt bevorzugt im Bereich zwischen 5 und 10 mm, kann aber auch kürzer oder länger sein.

Figur 4 zeigt eine zweite bevorzugte Ausführungsform der erfindungsgemäßen Huf-Bohr/Fräs-Kombination. Der wesentliche Unterschied zur Ausführungsform von Figur 3 ist, dass bei der Huf-Bohr/Fräs-Kombination 40 von Figur 4 die Schneiden der Bohreinrichtung 41 ohne Nut direkt in die Schneiden der Fräseinrichtung 42 übergehen. Dies wirkt sich positiv auf den Abtransport von Hufmaterialtransport aus.

Zur Zeit wird eine Ausführung bevorzugt, bei der die Schneiden einer dreischneidigen Bohreinrichtung 41 in die Schneiden einer dreischneidigen Fräseinrichtung 42 übergehen.

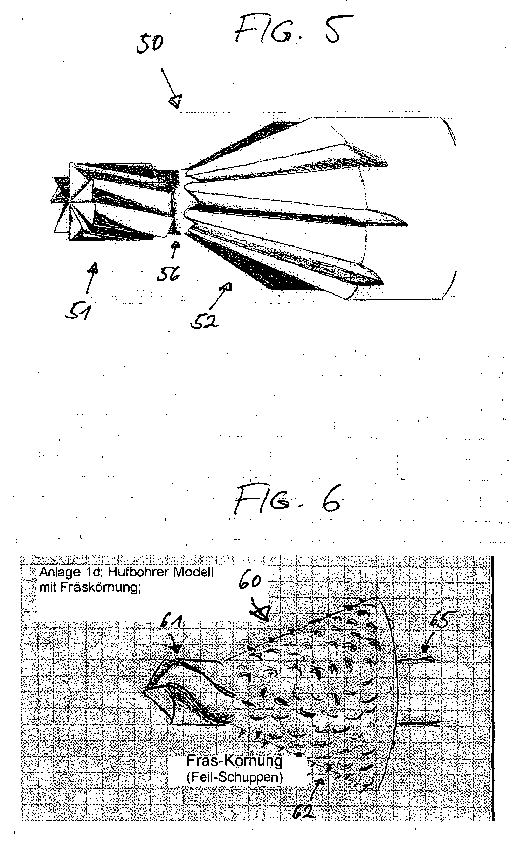

Figur 5 zeigt eine weitere bevorzugte Ausführungsform der erfindungsgemäßen Huf-Bohr/Fräs-Kombination. Die Bohreinrichtung 51 der Huf-Bohr/Fräs-Kombination 50 ist als fräsende Spitze ausgebildet. Eine bohrende Wirkung wird durch das Anwenden einer Kraft in axialer Richtung erreicht, unterstützt von hohen Umdrehungszahlen/min. Man erreicht mit dieser Ausführungsform einen sehr sauberen Schnitt.

Figur 6 zeigt ein weiteres Ausführungsbeispiel der erfindungsgemäßen Bohr/Fräs-Kombination. Die Huf-Bohr/Fräs-Kombination 60 von Figur 6 weist eine Bohreinrichtung 61 auf, an die sich ein konischer Abschnitt anschließt, der die Fräseinrichtung 62 definiert. Die Fräseinrichtung 62 weist keine Frässchneiden auf, sondern Feilschuppen, die ebenfalls fräsend/schleifend/abtragend wirken. An der hinteren Stirnseite ist ferner ein Schaft 65 vorgesehen, um die Kombination 60 mit einem Handapparat, einer Bohrmaschine, oder einem Handgriff zu befestigen.

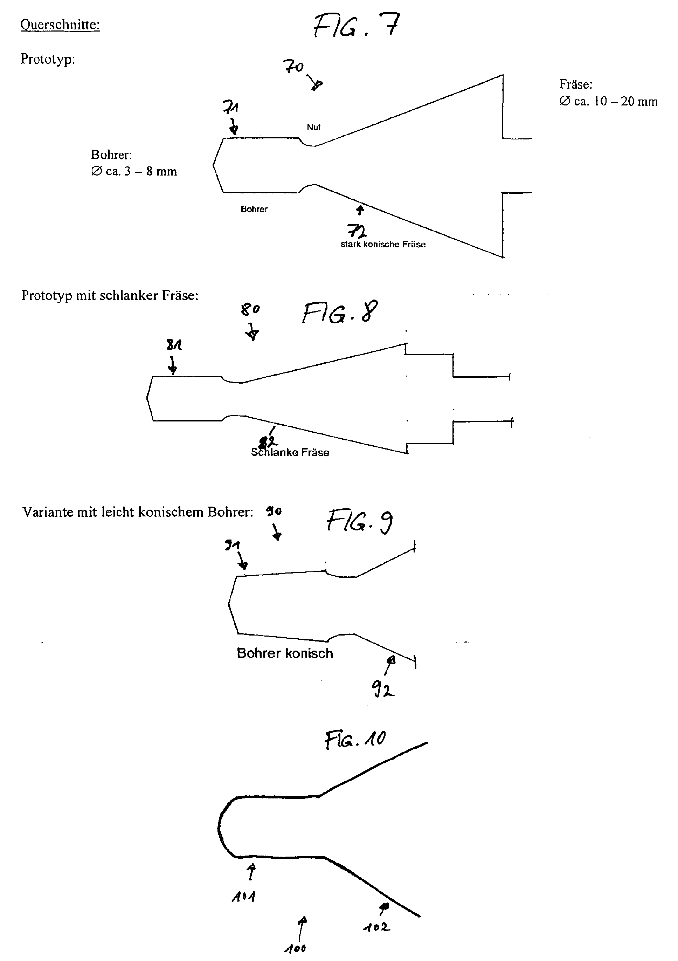

Die Figuren 7 bis 10 zeigen typische Querschnitte von erfindungsgemäßen Bohr/Fräs-Kombinationen 70, 80, 90, 100. Typische Durchmesser der Bohreinrichtungen 71, 81, 91, 101 liegen im Bereich von 3-8 mm, während die Durchmesser der Fräseinrichtungen 72, 82, 92, 102 - in Abhängigkeit vom jeweiligen Durchmesser der zugehörigen Bohreinrichtung 71, 81, 91, 101 und vom Vorhandensein einer Nut - etwa 2-8 mm an der "Spitze" und etwa 10-20 mm an der rückseitigen Stirnseite (maximaler Querschnitt) betragen.

Bei der Bohr/Fräs-Kombination 100 von Figur 10 weist die - vorzugsweise zweischneidige - Bohreinrichtung 101 eine abrundete Spitze auf, die sich besonders bei weicherem Horn hervorragend eignet, um scharfe und saubere Schnittflächen auszubilden.

Es wird darauf verwiesen, dass die Begriffe Bohreinrichtung und Fräseinrichtung nicht ausschließend zu interpretieren sind. So kann die Bohreinrichtung durchaus auch fräsende Eigenschaften aufweisen, während die Fräseinrichtung auch bohrende oder schleifende Eigenschaften aufweisen kann. Ein Beispiel hierfür ist die Bohreinrichtung 51 der Kombination von Figur 5, oder die Fräseinrichtung 62 der Kombination 60 von Figur 6. Ferner sei darauf verwiesen, dass die Bohreinrichtung nicht streng zylindrisch und die Fräseinrichtung nicht streng konisch sein muss. Beispielsweise kann auch, wie in Figur 9 skizziert, die Bohreinrichtung 91 eine konisch zulaufende Form aufweisen. Die konische Form der Fräseinrichtung ist aber bevorzugt, da eine konische Öffnung der Hornsohle besonders geeignet ist: sie verhindert erstens ein versehentliches zu tiefes Eindringen in den Huf, gewährleistet, dass Wundsekret abfließen und die entzündete Lederhaut abheilen kann, und kann leicht zum Schutz der Lederhaut durch einen passenden Pfropf provisorisch oder dauerhaft verschlossen werden.

Der erfindungsgemäße Huffräskopf (zusammen mit einem Bohrer) und die erfindungsgemäße Huf-Bohr/Fräs-Kombination sind für die Eröffnung und Drainierung von Hufabszessen (Pododermatitis superficialis / profunda purulenta), Nageltrittverletzungen und anderen Lederhautentzündungen konzipiert.

Der Einfachheit halber werden die Huf-Bohr/Fräs-Kombination und die Kombination (herkömmlicher) Bohrer/ (erfindungsgemäßer) Huffräskopf nachfolgend unter dem Begriff "Hufbohrer" zusammengefasst. Der Hufbohrer kann z.B. mit einem ergonomisch geformten Handgriff oder einer leichten Akkubohrmaschine verbunden sein.

Die empfohlene Vorgehensweise mit unterschiedlich dimensionierten Hufbohrern ist die folgende:

Kann der Tierarzt sicher eine Abszesshöhle orten, benutzt er zunächst einen Hufbohrer geringen Durchmessers mit einer nur gering konischen Fräse, um den Defekt in der Hornsohle möglichst gering zu halten. Die konisch geformte Fräse an dem kurzen Bohrer verhindert außerdem ein versehendliches zu tiefes Eindringen in den Huf und die Schädigung tiefergelegener Gewebe. Außerdem gewährleistet die konische Öffnung im Horn, dass der entzündete Lederhautbereich langsam von innen her verheilen kann und sich nachbildendes Wundsekret und Eiter stets abfließen kann (Drainage).

Muss sich der Tierarzt unter Sichtkontrolle entlang eines feinen Hornrisses ins Innere des Hufes arbeiten, benutzt er einen Bohrer größeren Durchmessers, evtl. mit einem stark konischen Fräse.

Im Gegensatz zur Behandlung mit einem Hufmesser bleibt nach der Verwendung des Hufbohrers lediglich ein kleiner, sauber abgegrenzter konischer Defekt im Sohlenhorn zurück. Mit den erfindungsgemäßen Vorrichtungen ist es daher möglich, einen kurzen (wenige mm bis 1 cm langen) Bohrkanal mit einer sich nach außen verbreiternden, vorzugsweise konischen, Öffnung in die Hornsohle eines Pferdehufs zu schneiden. Durch die trichterförmige Öffnung und deren sauberer und glatter Oberflächenbeschaffenheit kann die Wunde langsam von innen heraus verheilen.

Ein solcher Defekt lässt sich gut mit einem passenden Pfropf aus z.B. mit Hufteer getränktem Filz provisorisch verschließen und ggf. langfristig mit Hufkitt auffüllen, während die Behandlung mit einem Hufmesser häufig große, unförmige Defekte im Horn ergibt, die sich nur schlecht provisorisch verschließen lassen und nur langsam verheilen.

Die oben beschriebenen bevorzugten Ausführungsformen sind nur exemplarisch zu verstehen. Der Schutzbereich der Erfindung wird allein durch die nachfolgenden Patentansprüche definiert.

## Patentansprüche

1. Huffräskopf (10, 20) zur Hufbehandlung, umfassend:
eine axiale Bohrung (14, 24) zum Ein- oder Durchführen eines Bohrers (1),
eine Mantelfläche (12, 22), die bei axialer Rotation des Huffräskopfes fräsende Eigenschaften aufweist.

2. Huffräskopf (10, 20) nach Anspruch 1, wobei eine Einhüllende der Mantelfläche (12, 22) eine konische Form aufweist.

3. Huffräskopf (20) nach Anspruch 1 oder 2, umfassend:
eine Feststelleinrichtung (25), um eine Relativbewegung zwischen dem Huffräskopf (20) und einem durch die axiale Bohrung (24) ein- oder durchgeführten Bohrer (1) zu verhindern.

4. Huffräskopf (10 ,20) nach einem der vorangegangenen Ansprüche, ferner umfassend:
Frässchneiden und/oder Schleifpartikel an der Mantelfläche des Huffräskopfes (10, 20).

5. Huf-Bohr/Fräs-Kombination (30, 40, 50, 60, 70, 80, 90, 100) zur Hufbehandlung, umfassend:
eine Bohreinrichtung (31, 41, 51, 61, 71, 81, 91, 101) und eine Fräseinrichtung (32, 42, 52, 62, 72, 82, 92, 102), die axial miteinander so ausgerichtet sind, dass sich einem bei axialer Rotation bohrend wirkender Abschnitt ein fräsend wirkender Abschnitt anschließt.

6. Huf-Bohr/Fräs-Kombination (30, 40, 50, 60, 70, 80, 90, 100) nach Anspruch 5, wobei die Bohreinrichtung (91) und/oder die Fräseinrichtung (32, 42, 52, 62, 72, 82, 92, 102) eine Mantelfläche aufweisen, deren Einhüllende eine konische Form aufweist.

7. Huf-Bohr/Fräs-Kombination nach einem der Ansprüche 5 oder 6, wobei die Bohreinrichtung und die Fräseinrichtung axial gegeneinander verschiebbar sind und eine Feststelleinrichtung vorgesehen ist, um eine Relativbewegung zwischen der Fräseinrichtung und der Bohreinrichtung zu verhindern.

8. Huf-Bohr/Fräs-Kombination (30, 40, 50, 60, 70, 80, 90, 100) nach einem der Ansprüche 5 oder 6, wobei die Bohreinrichtung (31, 41, 51, 61, 71, 81, 91, 101) und die Fräseinrichtung (32, 42, 52, 62, 72, 82, 92, 102) einstückig miteinander ausgebildet sind

9. Huf-Bohr/Fräs-Kombination (40) nach Anspruch 8, bei der Schneiden der Bohreinrichtung (41) in Schneiden der Fräseinrichtung (42) übergehen.

10. Huf-Bohr/Fräs-Kombination nach Anspruch 9, wobei die Bohreinrichtung und die Fräseinrichtung jeweils dreischneidig ausgebildet sind.

11. Huf-Bohr/Fräs-Kombination (30, 50, 70 ,80, 90) nach einem der Ansprüche 5 bis 8, wobei eine radial verlaufende Nut (36, 56) vorgesehen ist, die die Bohreinrichtung (31, 51, 71, 81, 91) und die Fräseinrichtung (32, 52, 72, 82, 92) gegeneinander abgrenzt.

12. Huf-Bohr/Fräs-Kombination (100) nach einem der Ansprüche 5 bis 11, wobei die Bohreinrichtung (101) eine abgerundete Spitze aufweist.

13. Huf-Bohr/Fräs-Kombination (30, 40, 50, 60, 70, 80, 90, 100) nach einem der Ansprüche 5 bis 12, ferner umfassend:
einen Schaft (35, 45, 65) zur Befestigung der Huf-Bohr/Fräs-Kombination in einem Spannfutter.

14. Huf-Bohr/Fräs-Kombination (30, 40, 50, 60, 70, 80, 90, 100) nach einem der Ansprüche 5 bis 13, ferner umfassend:
Frässchneiden und/oder Schleifpartikel an der Mantelfläche der Fräseinrichtung (32, 42, 52, 62, 72, 82, 92, 102).
